(19) Europäisches Patentamt
European Patent Office
Office européen des brevets

(11) **EP 2 746 742 A1**

(12) **EUROPEAN PATENT APPLICATION**

(43) Date of publication:
**25.06.2014 Bulletin 2014/26**

(51) Int Cl.:
*G01K 17/10* (2006.01)     *F24D 19/10* (2006.01)

(21) Application number: **12197670.8**

(22) Date of filing: **18.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Aquametro AG**
**4106 Therwil (CH)**

(72) Inventors:
- **Vincent, Michael Grange**
  **4106 Therwil (CH)**

- **Durmeier, Franz**
  **79591 Eimeldingen (DE)**
- **Hüneke, Karsten**
  **28816 Stuhr (DE)**

(74) Representative: **Irniger, Ernst**
**Troesch Scheidegger Werner AG**
**Schwäntenmos 14**
**8126 Zumikon (CH)**

(54) **Thermal energy meter, thermal energy exchange system and method for metering exchanged thermal energy**

(57) The present invention involves a thermal energy meter for determining a thermal energy exchanged by a carrier liquid with an antifreeze substance. The thermal energy meter comprises an evaluation unit, which is configured to determine the exchanged thermal energy in dependency on a plurality of properties of the carrier liquid. Thereby the thermal energy meter (10) comprises a first connector (12), which is connectable to a material property sensor and which is connected to the evaluation unit (16) for transmitting an electrical input signal to the evaluation unit (16) and the evaluation unit (16) is configured to determine the concentration (C) of the antifreeze substance in the carrier liquid in dependency on the received electrical input signal and to use this concentration (C) as one of the properties (p, V, Tr, Ts, C) of the carrier liquid. This way, a precise metering of the exchanged thermal energy as well as a flexible adjustment to changing operational conditions is achieved.

Fig. 1

EP 2 746 742 A1

## Description

TECHNICAL FIELD OF THE INVENTION

The present invention is related to a thermal energy meter for determining the thermal energy exchanged by a carrier liquid, which comprises an antifreeze substance. Such a thermal energy meter is typically used in heat exchange systems, for example in heating or cooling applications or in climate control or solar energy installations. Further, the present invention is related to a corresponding thermal energy exchange system and a method for metering the exchanged thermal energy.

BACKGROUND OF THE INVENTION

A thermal energy exchange system that is operated on a carrier liquid with an antifreeze substance, often water and a specific type of glycol, and a thermal energy meter that is suitable for this kind of carrier liquid is well known. For example, the "CALEC® ST, Multi-protocol heating and cooling energy calculator" from Aquametro AG, Therwil, Switzerland, is a thermal energy meter, which determines the exchanged thermal energy by taking into account a setting, which represents the amount of the glycol in the water at start-up of the heat exchange system.

SUMMARY OF THE INVENTION

The present invention has the objective to propose an improved thermal energy meter, an improved thermal energy exchange system and an improved method for metering the exchanged thermal energy.

This objective is reached by a thermal energy meter comprising the features specified in claim 1. A thermal energy exchange system and a method for metering the exchanged thermal energy as well as further embodiments of the invention are specified in the further claims.

The present invention involves a thermal energy meter for determining a thermal energy exchanged by a carrier liquid with an antifreeze substance. The thermal energy meter comprises an evaluation unit, which is configured to determine the exchanged thermal energy in dependency on a plurality of properties of the carrier liquid. Thereby the thermal energy meter comprises a first connector, which is connectable to a material property sensor and which is connected to the evaluation unit for transmitting an electrical input signal to the evaluation unit and the evaluation unit is configured to determine the concentration of the antifreeze substance in the carrier liquid in dependency on the received electrical input signal and to use this concentration as one of the properties of the carrier liquid. This way, a precise metering of the exchanged thermal energy as well as a flexible adjustment to changing operational conditions is achieved.

The carrier liquid comprises a mixture of a liquid with good heat carrying properties, for example an aqueous solution, in particular water, and a certain amount of an antifreeze substance. In one example, the antifreeze substance, also called antifreeze additive, comprises an organic substance such as glycol, in particular glycol-based ethylene or glycol-based propylene, or an inorganic substance such as a salt, also called brine.

The terms "carrier liquid" or "anti-freeze" are not limited to glycol or brine mixtures and may embrace any heat carrying substance, the heat carrying property of which varies with concentration of the mixture.

The ratio of the amount of antifreeze substance to the total amount of the carrier liquid is expressed by a concentration, which typically is expressed by a volume relation or volume percentage, denoted %Vol, or by a mass relation or mass percentage, denoted %Mass. At a certain concentration the carrier liquid has sub-zero freezing point properties, for example the carrier liquid does not freeze at temperatures down to -10° C, if the antifreeze substance has a concentration of 30 %Vol.

The electrical input signal as well as the corresponding input values can be of any type that is suitable for being processed and/or evaluated by a numerical processor, in particular a calculating unit. For example, the electrical input signal can be an analogue or a digital signal and the input value can be a number with a, possibly inherent, dimension such as %Vol, °C or $kg/m^3$, or a dimensionless number such as a float point number, an integer or a binary sequence.

The electrical connector may be of any kind of electrical interface, also called terminal, for example a separable connector such as a plug or a socket, a fixed connector such as an attachment point or a contact point or a connector for a wireless connection such as an antenna.

In one example, a wired connection, in particular a hardwired connection, is to be replaced by a wireless connection such as radio transmission used in flow meters. Thus, the term electrical connector as defined above also includes the case, where some or all wired connections have been replaced with respective wireless connections.

Surprisingly, the invention is particularly advantageous in an environment of changing operational conditions. This is achieved, because the metering is dynamically adjusted to the actual operational conditions, whereas a static concentration parameter - as known from the prior art - is fixed to the setting applied at a certain point in time, for example at start-up of a heat exchange system. Typically, the concentration of the antifreeze substance in the carrier liquid of a thermal energy exchange system changes with time, for example due to evaporation of the water or leakage and the subsequent topping up of the carrier liquid with water. In such cases the actual concentration of the antifreeze substance may significantly differ from the initially or repeatedly specified value, which generally leads to significant deviations in the metering of the exchanged thermal energy from the correct value.

In contrast, the thermal energy meter according to the invention will always determine the correct amount of the exchanged thermal energy, even under changing operational conditions. Thus, a particularly stable operation and a precise metering can be achieved.

Further, the determining of the concentration can be accomplished in place without the need for intervention in the running operation of the thermal energy exchange system. In particular, it is not necessary to shut down the system, taking samples of the carrier liquid and sending the samples to a laboratory for analysis or using specialized equipment designed for this purpose. This procedure can be costly and time consuming, particularly if this has to be performed often, for example before commissioning a thermal energy exchange system and thereafter at regular intervals, for example, after topping up the thermal energy exchange system with water.

In an embodiment of the invention, the evaluation unit is configured to determine a material property of the carrier liquid from the received input signal and to determine the concentration in dependency on this material property, wherein the material property is indicative of the amount of the antifreeze substance in the carrier liquid. Thus, the material property can be reused in further evaluations and/or calculations. For example, if the material property is a density, this density may also be used to calculate a mass flow from a measured volume flow.

In a further embodiment of the invention, the material property is indicative of at least one of:

- a density,
- a speed of sound,
- a viscosity,
- a sonic impedance, and
- an electric conductivity.

These material properties of the carrier liquid provide an efficient and precise means for determining the concentration. In one example, the material property is the density or a viscosity, each may be determined as known from the prior art, for example by using a density meter or a viscosity meter respectively.

In a further embodiment of the invention, the evaluation unit is configured to determine the concentration value by evaluating a function of a set of at least one input value, which corresponds to the input signal, in particular evaluating the function by using a look-up table and/or by calculating a mathematical function, further in particular a polynom. This way an efficient determination of the concentration can be achieved.

In one example, the mathematical function or the look-up table may be represented by a diagram, showing a plurality of non-intersecting curves. In a further example, the look-up table and/or the coefficients of the mathematical function are stored in a memory unit, in particular a nonvolatile flash memory.

In a further embodiment, the evaluation unit according to the invention comprises a further connector, which is connectable to a temperature sensor and which is connected to the evaluation unit for transmitting a further electrical input signal to the evaluation unit, and the evaluation unit is configured to determine the concentration in additional dependency on this further input signal as an indicator of a carrier liquid temperature, in particular of a supply-flow temperature or a return-flow temperature. This way the concentration can precisely be determined, even under operational conditions with large temperature changes, for example solar energy installations.

In an example the thermal energy meter comprises two further connectors, which are connectable to two temperature sensors and which are connected to the evaluation unit for transmitting two further electrical input signals to the evaluation unit and the evaluation unit is configured to determine the exchanged thermal energy in additional dependency on this further two input signals as indicators of two temperatures of the carrier liquid, in particular of a supply-flow temperature and a return-flow temperature.

In a further embodiment of the invention, the evaluation unit is configured to determine the concentration and/or the exchanged thermal energy in additional dependency on a parameter, which is indicative of a material composition of the antifreeze substance, in particular a specific type of glycol or salt. This way, differences of the properties of the antifreeze substance, for example material and/or thermodynamical characteristics, can be taken into account such that a very accurate metering is achieved. In one example, the parameter indicates that the antifreeze substance is a glycol-based ethylene or glycol-based propylene.

In a further example, each possible value of the parameter refers to a different look-up table. In another example, the exchanged thermal energy is determined in additional dependency on such a parameter.

In a further embodiment of the invention, the evaluation unit comprises a further electrical connector, which is connectable to a flow meter and which is connected to the evaluation unit for transmitting a further electrical input signal to the evaluation unit and the evaluation unit is configured to determine the concentration in additional dependency on this further input signal as an indicator of a carrier liquid flow, in particular a volume flow or a mass flow. Depending on the operational situation, i.e. the preference of a mass flow meter or a volume flow meter according to the actual application, a precise and/or cost-effective metering of the thermal energy is achieved.

In one example the mass flow is measured by a mass flow meter, such as a Coriolis flow meter, and volume flow is measured by a volumetric flow meter, such as an ultrasonic flow meter. In case of a volumetric flow meter, one temperature sensor may be either incorporated into the volumetric flow meter or placed adjacent to it so that the density of the carrier liquid can precisely be determined.

In one example, the properties of the carrier liquid, in particular at least one of: the flow, the supply-flow temperature, the return-flow temperature and the material property are evaluated and/or measured at regular intervals, for example every second. In another example, the electrical input signals are transmitted in digital or analogue form to the evaluation unit. In a further example, the evaluation unit processes these quantities during fixed intervals, for example synchronous with the measurement, in particular the temperature measurements.

In a further embodiment of the invention, the thermal energy meter further comprises a data interface being connected to the evaluation unit for transmitting data concerning the concentration and/or the material property to a further device, in particular to a further thermal energy meter. This way an efficient further use of a once determined property can be achieved.

In one example, the data interface is implemented as a unidirectional or a bidirectional data connection. In another example, the data interface is configured to connect to a data bus. In a further example, the data connection is wired or wireless and in another further example, the data interface is configured to use a remote data connection such as an intranet or an internet connection.

In a further embodiment of the invention, the thermal energy meter further comprises a material property sensor, which is in contact with the carrier liquid and which is connected to the first connector for providing the electrical input signal, wherein in particular, the material property sensor is at least one of:

- a density sensor,
- a speed of sound sensor,
- a viscosity sensor,
- a sonic impedance sensor,
- an ultrasonic sensor, and
- an electric conductivity sensor.

The term "in contact with the carrier liquid", as used throughout the description and in the claims, includes any kind of arrangement, which is capable of determining a property of the carrier liquid. Such an arrangement can be a direct contact such as a measurement surface touching the carrier liquid or an indirect contact such as a measurement through a diaphragm or a wall.

For example, in the case of the ultrasonic sensor, a transducer generates an ultrasonic beam, which passes through the carrier liquid to a further transducer that receives the ultrasonic beam in order to determine the sound velocity of the carrier liquid. This is also true for the sonic impedance sensor. The transducers do not necessarily have to be in direct contact with the liquid, they can be mounted on the wall of the supply line or the wall of the return line, such as found in the clamp-on type of ultrasonic sensors. Also in this case, the ultrasonic sensor is regarded as being in contact with the carrier liquid.

In one example, the material property sensor is specially designed for being used in the thermal energy meter according to the invention, which provides particularly cost-effective implementations. In another example, the material property sensor is a commonly used type.

In a further embodiment of the invention, the thermal energy meter further comprises at least one temperature sensor, which is in contact with the carrier liquid and which is connected via a further connector to the evaluation unit, wherein the material property sensor is mounted adjacent to the at least one temperature sensor. With this arrangement a substantial or an even exact correlation between the measured temperature and the measured material property is achieved. This improves the accuracy for determining the concentration.

In a further embodiment of the invention, the thermal energy meter further comprises a flow meter for the carrier liquid, in particular a volume flow meter or a mass flow meter, wherein the flow meter is connected via a further connector to the evaluation unit and the liquid property sensor is mounted adjacent to or integrated in the flow meter. With this implementation a high correlation between the flow and the material property can be achieved, which, in turn, provides for an improved accuracy for determining the concentration of the carrier liquid.

In a further example, the properties of the carrier liquid, in particular at least one of: the flow, the supply-flow temperature, the return-flow temperature and the material property are evaluated and/or measured at regular intervals, for example every second. In another example, one or each sensor sends an electrical signal to the evaluation unit, either in digital or in analogue form. In a further example, the evaluation unit processes these quantities during fixed intervals, for example synchronous with a measurement of the properties of the carrier liquid, in particular with the temperature measurements.

In one example, the thermal energy meter comprises a mass flow meter and in addition a volume flow meter as material property sensor. This way, the density of the carrier liquid can be determined by dividing the mass flow by the volume flow. In another example, the functions of the mass flow meter and the volume flow meter are reversed.

Further, the invention involves a thermal energy exchange system with a heat exchanger, a carrier liquid comprising an antifreeze substance and a thermal energy meter according to any one of the embodiments of the thermal energy meter or the corresponding examples. Thereby the received electrical input signal corresponds to a material property of the carrier liquid flowing in a supply line or in a return line of the heat exchanger. Depending on the actual application, i.e. heating or cooling, the material property and/or the concentration can be determined in that part of the thermal energy exchange system, which is nearest to room temperature. This improves accuracy.

In one example, the thermal energy meter is connected to the supply line and to the return line for determining the exchanged thermal energy, in particular to the supply line and the return line on the side of the thermal energy provider.

Further, the invention involves a thermal energy exchange system with a first thermal energy meter according to any one of the embodiments of the thermal energy meter or the corresponding examples. Thereby the first thermal energy meter is connected via a communication network to at least one further thermal energy meter for transmitting data, which concerns the material property and/or the concentration from the first thermal energy meter to the at least one further thermal energy meter.

A particular advantage of this setup is that only one thermal energy meter needs to have the ability of providing the material property for the determination of the concentration. This is especially useful for existing thermal energy exchange systems, since only one of the thermal energy meter and/or flow meter needs to be exchanged, thus lowering the costs of adapting an existing thermal energy exchange system to one that uses the capabilities offered by the invention.

In one example, the data is transmitted by wire, in particular by using a bus protocol. In another example, the data is transmitted by radio or by another wireless transmission.

Further, the invention involves a method for metering a thermal energy exchanged by a carrier liquid comprising an antifreeze substance, the method comprising the steps of:

- receiving an electrical input signal from a sensor, which is in contact with the carrier liquid;

- evaluating the received electrical input signal for determining the concentration of the antifreeze substance in the carrier liquid in dependency on the received electrical input signal; and

- determining the exchanged thermal energy in dependency on the determined concentration.

The advantages of the method according to the invention correspond to the advantages of the previously mentioned thermal energy meter and the corresponding thermal energy exchange system and the corresponding examples.

In a further embodiment of the previous method embodiment, the step of determining the concentration (C) comprises determining the fulfillment of a condition and the concentration is determined in dependency on this condition. In particular the fulfillment of the condition is at least one of:

- on commissioning,

- at regular intervals,

- after an intervention of the thermal energy exchange system, and

- after a revision of the thermal energy exchange system.

This way, regular or irregular adaptations and/or adjustments of the thermal energy exchange system can be achieved.

Further, the invention involves a use of the thermal energy meter according to the invention in a solar installation. This is particular useful, if these installations are operated by persons, which have no access to specialized measurement equipment. Further, solar installations are often exposed to strong changing environments, for example in cases when the panels are covered with snow.

In a further embodiment of the previous method embodiments, the step of determining the concentration further comprises a monitoring of the determined concentration, in particular by calling for operator attention, further in particular by emitting a warning or an alarm, if the concentration exceeds or falls below a predetermined threshold. This way, an improved protection from freezing of the supply and/or return lines can be achieved and hence the monitoring avoids costly repairs. This is particular advantageous for detecting concentration changes, for example due to a topping up of the carrier liquid with water.

In a further embodiment of the previous method embodiments, the step of determining the concentration further comprises:

- determining a temperature threshold in dependency of the determined concentration;

- measuring a temperature of the carrier liquid, in particular a return flow temperature; and

- calling for operator attention, in particular by emitting a warning or an alarm, if the measured temperature, falls below the temperature threshold.

This is particular advantageous for protection of the carrier liquid from freezing caused by temperature changes of the environment.

In one example, a concentration change and/or a temperature drop of the carrier liquid may automatically be compensated by adding an additional amount of carrier substance and/or water to the carrier liquid. Thus, the concentration level is controlled to always be at a predetermined value. This way, long periods of unattended operation can be achieved.

The temperature threshold can be determined from a freezing point temperature, also called lower temperature limit, which is a function of the concentration of the antifreeze substance in the carrier liquid. This function may be determined according to the expression:

$$Tfp = k(C)$$

where Tfp is the freezing point temperature, k is a function and C the concentration. The function k can be evaluated in many different ways, for example by calculating a polynomial or by using a look-up table. After determining the freezing point temperature, a temperature threshold can automatically be set, for example by adding a predetermined safety margin.

In one example, two concentration thresholds and/or temperature thresholds are defined and operator attention is called, when the concentration of the carrier liquid is outside of the two defined thresholds. In another example, the concentration and/or the temperature is regularly monitored.

In a further example the alarm functionality is implemented by a detection unit and/or an alarm unit, which in particular is incorporated in the thermal energy meter according to the invention, for example by a program executed on the thermal energy meter. In another further example, the alarm is a flashing light, a message sent to the mobile telephone of the operator, an audible signal or any other means that indicates an alarm.

It is expressly pointed out that any combination of the above-mentioned embodiments, or combinations of combinations, is subject to a further combination. Only those combinations are excluded that would result in a contradiction.

BRIEF DESCRIPTION OF THE DRAWINGS

Below, the present invention is described in more detail by means of exemplary embodiments and the included drawings. It is shown in:

Fig. 1    a simplified diagram illustrating, by way of example, a heat exchange system with an embodiment of a thermal energy meter 10 according to the invention;

Fig. 2    a block diagram illustrating the function of the calculator 16 according to a further embodiment of the thermal energy meter 10 of Fig. 1;

Fig. 3    a diagram illustrating the relation between the concentration C, the density $\rho$ and the return-flow temperature Tr as used by the calculator 16 according to Fig. 2;

Fig. 4    an illustration of a method for metering the exchanged thermal energy according to a further embodiment of the heat exchange system according to Fig. 1; and

Fig. 5    a simplified diagram illustrating a further embodiment of the heat exchange system according to Fig. 1 with a network of 2 further customers 190 and 290.

BRIEF DESCRIPTION OF THE INVENTION

The described embodiments are meant as illustrating examples and shall not confine the invention.

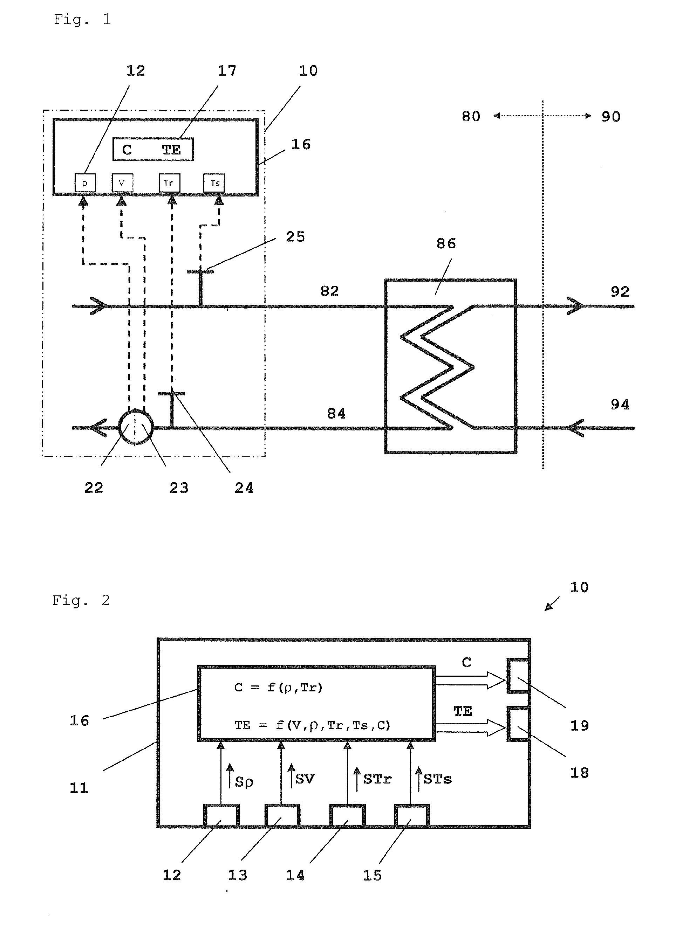

Fig. 1 shows a simplified diagram illustrating, by way of example, a thermal energy exchange system, which in this example is called: heat exchange system, and an embodiment of a thermal energy meter 10 according to the invention.

The heat exchange system can be regarded as being divided in two sides, one is the side of a provider 80 and the other side is the side of the consumer 90 (the dividing line is indicated by the dotted line). Thermal energy is exchanged by transferring this energy from the provider 80 to the consumer 90 by means of a carrier liquid, which comprises an antifreeze substance. For example, heating is transferred from a thermal power generating plant to a plurality of distributed houses.

The heat exchange system comprises a heat exchanger 86, a provider supply line 82, a provider return line 84 and the thermal energy meter 10 on the side of the provider 80 and a consumer return line 94 and a consumer supply line 92 on the side of the consumer 90.

In this example, the carrier liquid is a mixture of water and glycol with an initial concentration of approximately 30 %Vol. This liquid flows as a supply-flow from the provider 80 via the provider supply line 82 to the heat exchanger 86 and back from the heat exchanger 86 to the provider 80 via the provider return line 84 as a return-flow. Similarly, a further carrier liquid, which may also comprise an antifreeze substance, flows from the consumer 90 via the consumer return line 94 to the heat exchanger 86 and back from there to the consumer 90 via the consumer supply line 92. In the heat exchanger 86, the exchanged thermal energy is transferred from the carrier liquid to the further carrier liquid (vice-versa for providing cooling energy). In many applications water is used as carrier liquid as it is the only carrier liquid that has been officially approved for thermal energy custody transfer to date.

The amount of antifreeze substance mixed with the water determines the freezing point of the mixture: the higher the concentration of the substance in the carrier liquid, the lower the freezing point of the mixture. The thermodynamic properties of such mixtures not only depend on temperature but also depend on the concentration of the antifreeze substance in the carrier liquid.

The thermal energy meter 10 (indicated by the dash-double-dotted line) comprises a calculator 16, a material property sensor 22, a flow meter implemented as a volume flow meter 23, a return-flow temperature sensor 24, a supply-flow temperature sensor 25 and the corresponding electrical cables (indicated by the dashed lines). Instead of a volume flow meter a mass flow meter may also be used.

The thermal energy meter 10 further comprises four input connectors, in particular a first input connector 12, and a display unit 19, for example a LCD display.

The material property sensor 22, the volume flow meter 23 and the return-flow temperature sensor 24 are attached to the provider return line 84 and are in contact with the carrier liquid for measuring properties of the return flow. The supply-flow temperature sensor 25 is attached to the provider supply line 82 and is in contact with the carrier liquid for measuring the temperature of the supply flow. The material property sensor 22 and/or the volume flow meter 23 could also be installed at the provider supply line 82 instead of the provider return line 84, in which case the supply-flow temperature sensor 25 may be used for determining the density of the carrier liquid.

The material property sensor 22 is integrated in the volume flow meter 23 (schematically indicated by the dashed-dotted line) and the return-flow temperature sensor 24 is mounted adjacent the volume flow meter 23, but could also be integrated in the volume flow meter 23.

The material property sensor 22, the volume flow meter 23, the return-flow temperature sensor 24 and the supply-flow temperature sensor 25 are connected via the electrical cables (indicated by dashed lines) and connectors to the calculator 16 for transmitting the respective signals from the sensors to the calculator 16 as electrical input signals.

The calculator 16 converts the received input signals into corresponding input values, each representing the respective property of the carrier liquid. In particular, the signal from the material property sensor 22 is converted to a material property p of the carrier liquid, the signal from the volume flow meter 23 to a volume flow V, the signal from the return-flow temperature sensor 24 to a return-flow temperature Tr and the signal from the supply-flow temperature sensor 25 to a supply-flow temperature Ts. Thereby the material property p is indicative of a certain material property of the carrier liquid, for example its density, speed of sound or viscosity.

In this example, the provider 80 is supplying heat to the consumer 90, thus the temperature of the supply-flow is higher than the temperature of the return-flow, sometimes denoted as temperature Th and temperature Tc, where h stands for hot and c stands for cold. On the other hand, if the provider 80 is supplying cooling energy to the consumer 90, the temperature of the supply-flow is lower than the temperature of the return-flow.

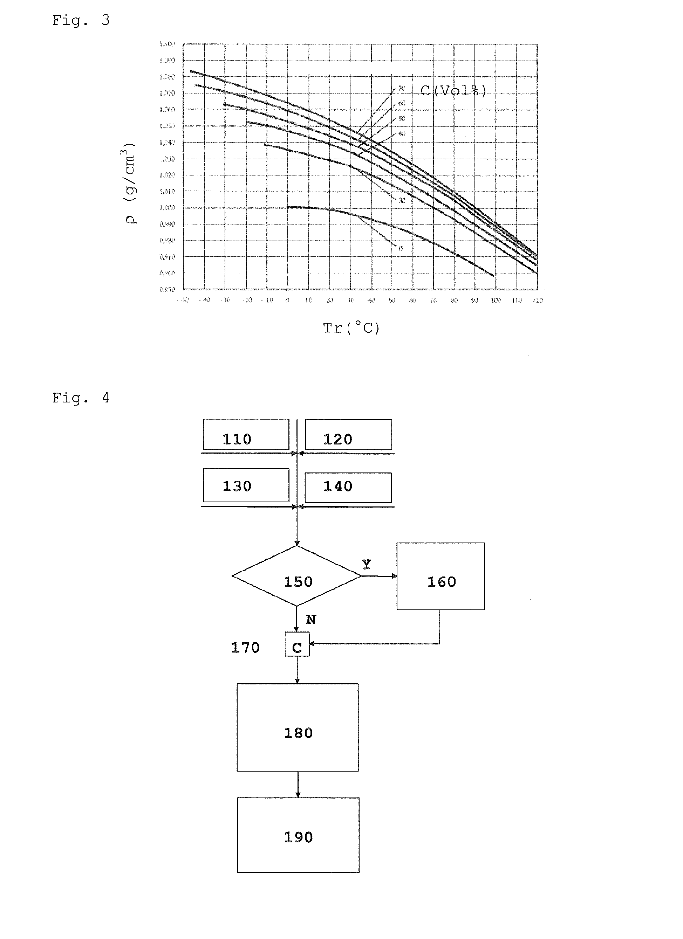

From the input values, i.e. values corresponding to the material property p, the volume flow V, the return-flow temperature Tr and the supply-flow temperature Ts, the calculator 16 determines a concentration C of the amount of antifreeze substance in the carrier liquid and a thermal energy TE, which represents the thermal energy exchanged between the provider 80 and the consumer 90. As an output, the calculator 16 displays both, the concentration value C and the thermal energy value TE on the display 17. Further details of these calculations are described with Fig. 2 and Fig. 3.

Fig. 2 shows a block diagram illustrating the function of the calculator 16 according to a further embodiment of the thermal energy meter 10 of Fig. 1. In this example, the thermal energy meter 10 comprises only connectors and no sensors and the material property (p in Fig. 1) is the density $\rho$ of the carrier liquid, measured at the temperature of the return-flow.

In addition to the calculator 16 and the first input connector 12 as described with Fig. 1, the thermal energy meter 10 comprises a housing 11, a second input connector 13, a third input connector 14, a forth input connector 15, a first output connector 18 and a second output connector, which in this example is implemented as a data interface 19. All the connectors 12, 13, 14, and 15 provide an electrical passage for the interior of the housing 11 to the interior of the housing 11 and vice versa.

Each input connector 12, 13, 14, and 15 is on one hand connectable to a liquid property sensor as described with Fig. 1. On the other hand, each input connector 12, 13, 14, and 15 is connected via an electrical wire to the calculator 16 for transmitting a respective electrical input signal to the calculator 16, which converts the received signals to provide an input value of the respective property of the carrier liquid. In particular, the first input connector 12 transmits a signal Sp for providing the density p, the second connector 13 transmits a signal SV for the volume flow V, the third connector 14 transmits a signal STr for the return-flow temperature value Tr and the forth connector 12 transmits a signal STs for the supply-flow temperature value Ts.

The calculator 16 calculates the concentration C as a function of a set of two input values, namely the values corresponding to the density $\rho$ and the return-flow temperature Tr. Thus, this function may be represented by the formal expression:

$$C = f(\rho, \ Tr).$$

Further details of this calculation will be explained in the description of Fig. 3.

In the following, the calculator 16 calculates the exchanged thermal energy TE as a function of set of five input values, namely the volume flow V, the already previously used density p, the return-flow temperature Tr, the supply-flow temperature Ts and the previously calculated concentration C according to the formal expression:

$$TE = f(V, \ \rho, \ Tr, \ Ts, \ C)$$

This calculation is performed according to procedures known in the prior art, for example according to the following expressions for calculating the specific enthalpy h(C, Ts) of the supply-flow and the specific enthalpy h(C, Ts) of the return-flow:

$$H(Ts) = h(C, \ Ts)$$

$$H(Tr) = h(C, \ Tr)$$

$$TE = \rho \ x \ V \ x \ [H(Ts) - H(Tr)]$$

The specific enthalpies h(C, Ts) and h(C, Ts) can be determined by using commonly available data, for example data according to the specification of the "CALEC® ST, Multi-protocol heating and cooling energy calculator".

In an approximation, sometimes used for determining a specific enthalpy difference ΔH, which is defined as ΔH = H(Ts) - H(Tr), this difference is calculated according to the expression:

$$\Delta H = [cp(Ts) + cp(Tr)] \times (Ts - Tr)/2$$

and from this difference the exchanged thermal energy TE is calculated by the expression:

$$TE = \rho \times V \times \Delta H$$

with the density ρ and the volume flow V as mentioned above and where cp(Th) and cp(Tc) are the specific heats at constant pressure of the heat carrier at the temperatures Ts and Tr, respectively.

Instead of the described formulism with specific enthalpies, other formulism may also be used. Further, in this example, the density ρ is readily available as an input value for determining the concentration C. Therefore this density ρ can be used directly for the calculation of the thermal energy TE.

Fig. 3 shows a diagram illustrating the relation between the concentration C, the density ρ and the return-flow temperature Tr as used by the calculator 16 according to Fig. 2. This diagram is based on an Ethylene glycol-based antifreeze substance.

The x-coordinate relates to the return-flow temperature Tr in units of °C. The y-coordinate relates to the density ρ of the carrier liquid in units of $g/cm^3$. The functional relation between the density ρ and the return-flow temperature Tr depends on the concentration C, indicated in units of %Vol. For a given density ρ and a given return-flow temperature Tr the corresponding concentration C can be determined numerically, for example by interpolating between neighboring values of the concentration C.

For example, if the density ρof the carrier liquid with the return-flow temperature Tr of -10°C is 1.045 $g/cm^3$, the concentration of the Ethylene glycol-based antifreeze substance is in the range between 33 %Vol and 37 %Vol.

Fig. 4 shows an illustration of a method for metering the exchanged thermal energy according to a further embodiment of the thermal energy exchange system according to Fig. 1. Thereby the symbols p, p, V, Tr, Ts, C and TE correspond to the symbols of Fig. 1 and Fig. 2.

Block 110 provides a first input value relating to the material property p, for example a density p.

Block 120 provides a second input value relating to the volume flow V.

Block 130 provides a third input value relating to the return-flow temperature Tr.

Block 140 provides a fourth value relating to the supply-flow temperature Ts.

At block 150 a decision is made whether the concentration C is to be determined. This could be done for example:

- on commissioning,
- at regular intervals,
- after an intervention to the heat exchange system, or
- after a revision of the heat exchange system.

If the decision is positive, indicated as "Y", the concentration C needs to be adjusted and the method proceeds to block 160. If the decision is negative, indicated as "N", the concentration C remains unchanged and the method proceeds to block 170.

Block 160 determines the concentration C as a function of the material property p and the return-flow temperature Tr. This function is represented by the formal expression:

$$C = f(p, Tr)$$

It could be some mathematical function such as a polynomial or polynomials or a look-up table from which C can be determined by interpolation for example.

Block 170 stores a value representing the concentration C and this value is forwarded and used for the calculation of exchanged thermal energy TE in block 180, until it is replaced by a new value. An initial value representing the concentration C at the time of commissioning could also be stored, if this value is available at this time.

Block 180 determines, if necessary, the density p(Tr) in dependence from the return-flow temperature Tr and from the concentration C. Thus, this density p(Tr) is determined by evaluating a function g according to the formal

expression:

$$\rho(Tr) = g(C,Tr)$$

Further, the specific enthalpies H(Ts) and H(Tr) for the supply-flow temperature Ts and the return-flow temperature Tr are determined by evaluating a function h according to the formal expressions:

$$H(Ts) = h(C,Ts)$$

$$H(Tr) = h(C,Tr)$$

Again, the function h of the concentration C and of a temperature could be evaluated by some mathematical functions such as polynomials or look-up tables.

Block 190 calculates the thermal energy TE according to the expression:

$$TE = \rho(Tr) \times V \times [H(Ts)-H(Tr)]$$

In an alternative embodiment using a mass flow meter for measuring a mass flow M instead of using the flow meter, the thermal energy TE is calculated according to expression:

$$TE = M \times [H(Ts)-H(Tr)]$$

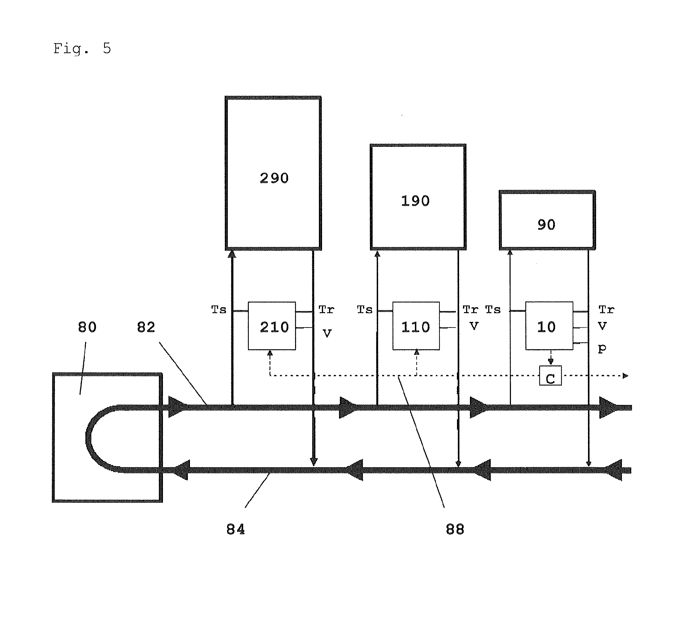

Fig. 5 shows a simplified diagram illustrating a further embodiment of the heat exchange system according to Fig. 1 with a network of 2 further customers 190 and 290.

In addition to the provider 80, the provider supply line 82 and the provider supply line 84 and a consumer 90 the heat exchange system comprises a first additional consumer 190 and a second additional consumer 290. This network comprises only three consumers to illustrate a further aspect of the invention. Typically, a large number of consumers are connected to such a heat exchange system.

As described for Fig. 1, the consumer 90 is connected to the provider supply line 82 and the provider return line 84 and a thermal energy meter 10 according to the invention is connected in parallel to the consumer 90. Similarly, the first additional consumer 190 and a second additional consumer 290 are connected to the provider supply line 82 and the provider return line 84 and the additional thermal energy meters 110 and 210 are connected in parallel to the additional consumers 190 and 290 respectively.

Thereby, the thermal energy is transferred via the carrier liquid flowing in the supply line 82 to each consumer 90, 190 and 290, for example by means of the heat exchanger 86 as illustrated in Fig. 1. After extraction of the thermal energy, the carrier liquid flows back to the provider through the return line 84 to be reheated and used again in a cyclic fashion.

As described for Fig. 1, each thermal energy meter 10, 110, and 210 determines a respective exchanged thermal energy by using a respective volume flow V, a respective supply-flow temperature Ts and a respective return-flow temperature Tr and a concentration value C as input values. Thereby, the volume flow V, the supply-flow temperature Ts and the return-flow temperature Tr can be different for every individual customer 90, 190 and 290. Thus, each consumer has a thermal energy meter installed so that the amount of thermal energy consumed can be determined for each consumer individually.

Further, each thermal energy meter 10, 110, and 210 comprises a data interface for connecting the respective thermal energy meter 90, 190, and 290 to a communication network 88 for transferring data.

In this example, the customer 90 uses a thermal energy meter 10 according to the invention, which uses a sensor (not shown) for determining the material property p and which calculates the concentration C and provides it as an output value. Further, this thermal energy meter 10 comprises a data interface for transmitting data concerning the concentration C via the communication network 88 to the additional thermal energy meters 110 and 210 and, if applicable, to further devices, for example to a further thermal energy meter (indicated by the box with the concentration C and the dotted arrows). In this example the data is transmitted by wire using a bus protocol.

Each of the thermal energy meters 110 and 210 uses the received data concerning the concentration C as an input value for determining the respective exchanged thermal energy. This way the concentration C needs only be determined by one of the thermal energy meters, namely the thermal energy meter 10 according to the invention, since the carrier liquid is the same for all consumers 90, 190 and 290.

The provider 80 could for example be a district heating or cooling plant or any plant that uses an aqueous solution of a substance as heat transfer liquid.

The consumers 90, 190 and 290 are represented by three different sized blocks. The size of the blocks represents the amount of thermal energy required for a given specific enthalpy difference H(Ts)-H(Tr): the larger the block, the more thermal energy is needed. Thus Consumer 290 could for example be a large building such as a factory, consumer 190 a medium sized building used, for example, by a company and Consumer 90 a house.

The amount of heat transferred to the consumers 90, 190 and 290 in unit time depends on the flow rate. Therefore, for the same enthalpy difference for all consumers 90, 190 and 290, the largest block 290 shown will require much larger flow rates than for example the smallest block 90.

The flow rate range determines the size of the piping and the size of the flow meters required, for example, to minimize pressure loss. Thus in general large flow rates require large pipes and large flow meters, whereas small flow rates require small pipes and small flow meters. For example, the largest block 290 may be fitted with pipes of 250mm diameter and a DN250 flow meter, whereas the smallest block shown 90 may be fitted with pipes of 25mm diameter and a DN25 flow meter.

Since the cost of a flow meter increases with its size, another advantage for this type of setup becomes apparent, namely that only the smallest sized flow meter in the network - that included in the thermal energy meter 10 - needs to have the capability of providing the material property p for the determination of the concentration C, the data of which is transmitted to the additional thermal energy meters 110 and 210 as previously described. The remaining flow meters could therefore be of cheaper varieties, for example, mechanical flow meters or other flow meters not capable of providing material property p. The concentration C may also be transmitted to an evaluation unit (not shown), which emits an alarm signal such as an alarm sound if the concentration C drops below a predefined threshold.

In this example the heat exchange system is a solar energy installation and the solar panels may experience temperatures down to -20°C, wherein an ethylene glycol-water mixture is used as carrier liquid.

The concentration of the glycol in the mixture determines a freezing point temperature Tfp of the carrier liquid, which is determined by the expression:

$$Tfp = k(C)$$

where k is a function and C the concentration. The function k is evaluated by calculating a polynomial. The freezing point temperature Tfp is then used to automatically set the predefined threshold as a lower temperature limit.

In this example, a temperature of -20°C corresponds to an ethylene-glycol concentration of 40 %Vol. For safety reasons, the installation designer may choose a higher concentration, for example 50 %Vol, which corresponds to a freezing point temperature of -30°C (as shown in Fig. 3). On commissioning of the heat exchange system the initial concentration would therefore be 50% Vol.

Over time the concentration C decreases, for example due to regular addition of water to the heat exchange system. Without corresponding addition of glycol, a point will be reached when the concentration C reaches or becomes less than 40%Vol. This may result in bursting of the supply and/or return lines of the heat exchange system due to freezing of the liquid, if the temperature at the solar panels reaches -20°C. This may lead to costly repairs.

By regularly monitoring the concentration of the carrier liquid, such dangerous situations can be avoided. Once the actual concentration is determined according to the invention, a corresponding freezing point temperature is calculated according to the previously described expression. In the following, a lower temperature threshold is set, for example -15°C, and/or a concentration threshold is set, which corresponds to the previously determined temperature threshold, for example at approx. 35 %Vol. The measured temperature of the carrier liquid is compared to the temperature threshold and when the measured temperature value falls below the threshold, an alarm is triggered. Such an alarm may inform an operator of the heat exchange system that the concentration is getting dangerously low.

The thresholds are usually maximum and minimum values of parameters, which are set in the thermal energy calculator. The alarm becomes active when the measured value is equal to or lies outside of these thresholds. In the above example, only one (minimum) threshold is needed, the thresholds being either a temperature or a concentration. In another example the threshold is a flow rate, and the maximum and minimum thresholds could define a flow rate measuring range, outside of which another alarm is triggered.

**Claims**

1.  A thermal energy meter (10) for determining a thermal energy exchanged by a carrier liquid with an antifreeze substance, the thermal energy meter (10) comprising an evaluation unit (16), which is configured to determine the exchanged thermal energy (TE) in dependency on a plurality of properties of the carrier liquid, wherein the thermal energy meter (10) comprises a first connector (12) being connectable to a material property sensor and being connected to the evaluation unit (16) for transmitting an electrical input signal (Sp) to the evaluation unit (16) and the evaluation unit (16) is configured to determine the concentration (C) of the antifreeze substance in the carrier liquid in dependency on the received electrical input signal (Sp) and to use this concentration (C) as one of the properties (p, V, Tr, Ts, C; p) of the carrier liquid.

2.  The thermal energy meter (10) according to claim 1,
    wherein the evaluation unit (16) is configured to determine a material property (p; p) of the carrier liquid from the received electrical input signal (Sp) and to determine the concentration (C) in dependency on this material property (p; p), the material property (p; p) being indicative of the amount of the antifreeze substance in the carrier liquid.

3.  The thermal energy meter (10) according to claim 2,
    wherein the material property (p; p) is indicative of at least one of:

    - a density (p),
    - a speed of sound,
    - a viscosity,
    - a sonic impedance, and
    - an electric conductivity.

4.  The thermal energy meter (10) according to any one of the previous claims, wherein the evaluation unit (16) is configured to determine the concentration value (C) by evaluating a function of a set of at least one input value, which corresponds to the input signal (Sp), in particular evaluating the function by using a look-up table and/or by calculating a mathematical function, further in particular a polynom.

5.  The thermal energy meter (10) according to any one of the previous claims, comprising a further connector (14, 15) being connectable to a temperature sensor and being connected to the evaluation unit (16) for transmitting a further electrical input signal to the evaluation unit (16), and the evaluation unit (16) is configured to determine the concentration (C) in additional dependency on this further input signal as an indicator of a carrier liquid temperature.

6.  The thermal energy meter (10) according to any one of the previous claims, wherein the evaluation unit (16) is configured to determine the concentration (C) and/or the exchanged thermal energy (TE) in additional dependency on a parameter being indicative of a material composition of the antifreeze substance, in particular a specific type of glycol or salt.

7.  The thermal energy meter (10) according to any one of the previous claims, comprising a further connector (13) being connectable to a flow meter (23) and being connected to the evaluation unit (16) for transmitting a further electrical input signal to the evaluation unit (16) and the evaluation unit (16) is configured to determine the concentration (C) in additional dependency on this further input signal as an indicator of a carrier liquid flow, in particular a volume flow (V) or a mass flow.

8.  The thermal energy meter (10) according to any one of the previous claims, further comprising a data interface (19) being connected to the evaluation unit (16) for transmitting data concerning the concentration (C) and/or the material property (p) to a further device, in particular to a further thermal energy meter (210, 110).

9.  The thermal energy meter (10) according to any one of the previous claims, further comprising a material property sensor (22), being in contact with the carrier liquid and being connected to the first connector (12) for providing the electrical input signal (Sp), in particular, the material property sensor (22) being at least one of:

    - a density sensor (22),

- a speed of sound sensor,
- a viscosity sensor,
- a sonic impedance sensor,
- an ultrasonic sensor, and
- an electric conductivity sensor.

10. The thermal energy meter (10) according to claim 9, further comprising at least one temperature sensor (24, 25) being in contact with the carrier liquid and being connected via a further connector (14, 15) to the evaluation unit (16), wherein the material property sensor (22) is mounted adjacent to the at least one temperature sensor (24, 25).

11. The thermal energy meter (10) according to claim 9 or 10, further comprising a flow meter (23) for the carrier liquid, in particular a volume flow meter (23) or a mass flow meter, the flow meter (23) being connected via a further connector (13) to the evaluation unit (16), wherein the liquid property sensor (22) is mounted adjacent to or integrated in the flow meter (23).

12. A thermal energy exchange system with a heat exchanger (86), a carrier liquid comprising an antifreeze substance and a thermal energy meter (10) according to any one of the previous claims, wherein the received electrical input signal (Sp) corresponds to a material property of the carrier liquid flowing in a supply line (82) to the heat exchanger (86) or in a return line (84) from the heat exchanger (86).

13. A thermal energy exchange system with a first thermal energy meter (10) according to any one of the claims 1 to 11, wherein the first thermal energy meter (10) is connected via a communication network (88) to at least one further thermal energy meter (110, 210) for transmitting data concerning the material property (p) and/or the concentration (C) from the first thermal energy meter (10) to the at least one further thermal energy meter (110, 210).

14. A method for metering a thermal energy exchanged by a carrier liquid with an antifreeze substance, the method comprising the steps of:

- receiving an electrical input signal (Sp) from a sensor (22) being in contact with the carrier liquid;
- evaluating the received electrical input signal (Sp) for determining the concentration (C) of the antifreeze substance in the carrier liquid in dependency on the received electrical input signal (Sp); and
- determining the exchanged thermal energy (TE) in dependency on the determined concentration (C).

15. A method according to the previous claim, wherein the step of determining the concentration (C) comprises:

determining the fulfillment of a condition and the concentration (C) is determined in dependency on this condition, in particular, the fulfillment of the condition being at least one of:

- on commissioning,
- at regular intervals,
- after an intervention of the thermal energy exchange system, and
- after a revision of the thermal energy exchange system.

16. A method according to claim 14 or 15, wherein the step of determining the concentration (C) further comprises a monitoring of the determined concentration (C), in particular by calling for operator attention, further in particular by emitting a warning or an alarm, if the concentration (C) exceeds or falls below a predetermined threshold.

17. A method according to any one of the claims 14 to 16, wherein the step of determining the concentration (C) further comprises:

- determining a temperature threshold in dependency of the determined concentration (C);
- measuring a temperature of the carrier liquid, in particular a return flow temperature; and
- calling for operator attention, in particular by emitting a warning or an alarm, if the measured temperature, falls below the temperature threshold.

Fig. 1

Fig. 2

$$C = f(\rho, Tr)$$

$$TE = f(V, \rho, Tr, Ts, C)$$

Fig. 3

Fig. 4

Fig. 5

**EUROPEAN SEARCH REPORT**

Application Number

EP 12 19 7670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/065276 A1 (BELIMO HOLDING AG [CH]; LINDGREN MATS [SE]; CARLANDER CARL [SE]; HOLOC) 24 May 2012 (2012-05-24) * abstract; figures * * page 1, line 10 - page 3, line 23 * ----- | 1-17 | INV. G01K17/10 F24D19/10 |
| A | EP 1 975 582 A2 (HYDROMETER GMBH [DE]) 1 October 2008 (2008-10-01) * abstract; figure 1 * * paragraphs [0001] - [0006] * ----- | 1,6,17 | |
| A | DE 10 2006 019281 B3 (KUNDO SYSTEMTECHNIK GMBH [DE]) 16 May 2007 (2007-05-16) * abstract * * paragraphs [0001] - [0006] * ----- | 1,17 | |

**TECHNICAL FIELDS SEARCHED (IPC)**

G01K
F24D

The present search report has been drawn up for all claims

| Place of search | Date of completion of the search | Examiner |
|---|---|---|
| The Hague | 6 January 2014 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 19 7670

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2014

| Patent document cited in search report | Publication date | Patent family member(s) | | Publication date |
|---|---|---|---|---|
| WO 2012065276 A1 | 24-05-2012 | CA | 2811776 A1 | 24-05-2012 |
| | | CN | 103201606 A | 10-07-2013 |
| | | EP | 2641071 A1 | 25-09-2013 |
| | | US | 2013259083 A1 | 03-10-2013 |
| | | WO | 2012065276 A1 | 24-05-2012 |
| EP 1975582 A2 | 01-10-2008 | DE | 102007015609 A1 | 09-10-2008 |
| | | EP | 1975582 A2 | 01-10-2008 |
| DE 102006019281 B3 | 16-05-2007 | DE | 102006019281 B3 | 16-05-2007 |
| | | EP | 1850104 A2 | 31-10-2007 |

EPO FORM P0459

For more details about this annex : see Official Journal of the European Patent Office, No. 12/82